# EUROPÄISCHE PATENTSCHRIFT

(11) **EP 2 414 721 B1**
(45) Veröffentlichungstag und Bekanntmachung des Hinweises auf die Patenterteilung: **23.01.2013**
(21) Anmeldenummer: 10805695.3
(22) Anmeldetag: 28.12.2010
(51) Int. Cl.: F16P 3/02, B23Q 11/08

(54) **LÄNGENVARIABLE SCHUTZABDECKUNG**
VARIABLE LENGTH PROTECTIVE COVER
REVÊTEMENT PROTECTEUR VARIABLE EN LONGUEUR

(30) Priorität: 08.01.2010 DE 102010004250
(43) Veröffentlichungstag der Anmeldung: 08.02.2012
(73) Patentinhaber: HEMA Maschinen- und Apparateschutz GmbH, 63500 Seligenstadt (DE)
(72) Erfinder: MAY, Matthias, 63863 Eschau (DE)
(74) Vertreter: Erb, Henning
(86) Internationale Anmeldenummer: PCT/EP2010/007949
(87) Internationale Veröffentlichungsnummer: WO 2011/082817

(56) Entgegenhaltungen:
- DE-A1- 10 308 024
- DE-U1-202007 002 839

## Beschreibung

Die vorliegende Erfindung befasst sich mit einer längenvariablen Schutzabdeckung, die eine Vielzahl von Lamellen aufweist, die an einer Längsseite jeweils eine stark abgewinkelte Befestigungskante, mit welcher sie mit die Lamellen verbindenden Koppelelementen oder mit einem die Lamellen verbindenden Faltenbalg verbunden sind, und an ihrer gegenüberliegenden Längsseite jeweils eine flach abgewinkelte Abstreifkante aufweisen, deren Rand auf einer jeweils benachbarten Lamelle aufliegt.

Derartige Schutzabdeckungen, insbesondere für Teile von Werkzeugmaschinen, sind mit oder ohne Faltenbalg bereits seit einiger Zeit bekannt, wobei sowohl L-förmige Ausführungsformen, bei welchen die Befestigungskanten nur relativ kurz von dem Lamellenkörper abstehen, als auch Ausführungsformen mit U-förmigen Lamellen bekannt sind, bei welchen die Befestigungskante durch den Steg des Lamellenquerschnitts gebildet ist, an den sich beidseitig die Schenkel des U-förmigen Querschnitts mit jeweils einer Abstreifkante am freien Ende anschließen. Eine U-förmige Lamelle stellt somit eine aus zwei L-förmigen Lamellen, die an der Befestigungskante einstückig verbunden sind, zusammengesetzte Lamelle dar.

Ein Beispiel für eine derartige Schutzabdeckung mit U-förmigen Lamellen ist aus der DE 103 08 024 A1 bekannt. Diese Schrift zeigt die übliche, über die Länge gleichmäßig breite Ausbildung der Abstreifkanten, die in der Regel um beispielsweise 10 bis 15°, ggf. aber auch mit stärkerer oder geringerer Neigung von dem Lamellenkörper abgewinkelt sind. Durch diese abgewinkelten Abstreifkanten ergibt sich eine elastisch nachgiebige Anlage, die dafür sorgen soll, dass Späne und andere Partikel den Behang nicht durchdringen können, sondern durch die Abstreifkanten abgestreift werden und beispielsweise in einen Sammelbehälter fallen. Ein weiteres Beispiel für Abstreiferkanten ist aus der DE 10 2004 055 714 A1 bekannt. Dort sind bei einer L-förmigen Lamelle im Bereich der Knickstelle Übergangsradien vorgesehen, wobei die Abstreiferkanten als geradlinige Gummilippen ausgebildet sind. Die mehrteilige Ausbildung verteuert die Lamellen und die Gummilippen können durch Späne schnell verschleißen.

Es hat sich gezeigt, dass mit geradlinig ausgebildeten Abstreifkanten oftmals nur ein unbefriedigender Schutz gegen das Eindringen von Spänen erreicht werden kann. Das liegt, abgesehen von aus dem Herstellungsverfahren resultierenden Einflussfaktoren, hauptsächlich daran, dass auf der einen Seite die stark abgewinkelte Befestigungskante als Aussteifung für eine weitgehend ebene Oberfläche des angrenzenden Bereichs des Lamellenkörpers sorgt, während auf der Seite der flach abgewinkelten Abstreifkante der Lamellenkörper sich infolge Materialelastizität aufwölben kann. Beim Auseinanderziehen und Zusammenschieben der Schutzabdeckung gleitet also eine Abstreifkante zeitweise auf einem ggf. aufgewölbten und anschließend auf dem weitgehend ebenen Oberflächenbereich der nachfolgenden Lamelle. Gleichmäßig breite Abstreifkanten an den selbst einer eventuellen Aufwölbung unterworfenen Seiten der Lamellen sind oft nicht in der Lage, in allen Bewegungsphasen in dichter Anlage an den unterschiedlichen Konturen der zu überstreichenden Oberflächen der Nachbarlamellen zu bleiben.

Die Aufgabe der Erfindung besteht darin, eine längenvariable Schutzabdeckung derart zu verbessern, dass das Eindringen von Partikeln und Fremdkörpern, wie z. B. Spänen bei der Werkstückbearbeitung, deutlich vermindert wird.

Erfindungsgemäß wird die Aufgabe durch eine längenvariable Schutzabdeckung der eingangs genannten Art gelöst, bei welcher die Breite der Abstreifkante über die Länge der Lamelle derart variiert, dass sich ein konvexer Verlauf des Randes der Abstreifkante über ihre gesamte Länge ergibt.

Es hat sich gezeigt, dass durch diese Maßnahme das Eindringen von Fremdkörpern zwischen die aufeinander gleitenden Lamellen erheblich vermindert werden kann.

Genauer gesagt ist die Wölbung in einem solchen Maße ausgebildet, dass die an einer aufgewölbten Seite einer Lamelle angeordnete Abstreifkante in ihrem mittleren Bereich auch noch in dem am weitesten ausgezogenen Zustand der Schutzabdeckung dicht an dem weitgehend ebenen Bereich der benachbarten Lamelle nahe deren Befestigungskante anliegt. Die konvexe Krümmung des Randes kann sich dabei über die gesamte Länge der Lamelle erstrecken, es ist aber auch möglich, dass die Lamelle über ihre Länge mehrere Teilabschnitte aufweist, in denen eine Variation der Breite der Abstreifkante vorgesehen ist.

Bei der Untergliederung in Teilabschnitte ist es besonders von Vorteil, wenn die Lamelle zwischen diesen Teilabschnitten Knickstellen aufweist, so dass sich eine Dach- oder im Längsschnitt eine polygonale Form ergibt. Im einfachsten Fall ist die Lamelle mittig einmal geknickt und verfügt über zwei Teilabschnitte seitlich der Knickstelle, in denen die Breite der Abstreifkante in übereinstimmender Weise oder in unterschiedlicher Weise variiert. Unterschiedliche Ausbildungen der Teilabschnitte können insbesondere bei asymmetrischen Lamellen, geneigten Einbaulagen oder dergleichen von Vorteil sein. An der Knickstelle können die beiden Teilabschnitte, wie z. B. bei einer Abkantung über eine Biegekante, materialschlüssig verbunden oder durch eine kleine, zweckmäßiger Weise z. B. durch Überlappung überdeckte Fuge getrennt sein.

Ein konvexer Verlauf des Randes der Abstreifkante kann beispielsweise dadurch erreicht werden, dass dieser über die Länge der Lamelle oder eines Teilabschnittes einen konstanten Radius aufweist. Die konvexe Krümmung kann aber auch dadurch erreicht werden, dass der Rand der Abstreifkante oder der Rand der Teilabschnitte der Abstreifkante der Lamelle eine Parabel, Hyperbel oder Ellipse beschreibt oder einer anderen Funktion folgt.

Wie bereits erwähnt, können die Lamellen auch U-förmig ausgebildet sein, wobei der Steg des U eine nach zwei Seiten aussteifend wirkende Befestigungskante bildet und jeder der beiden Schenkel des U eine Abstreifkante aufweist. Zur Herstellung der Lamellen eignen sich metallische Werkstoffen, z. B. Federstahl, oder Kunststoff.

Nachfolgend wird anhand der beigefügten Zeichnungen näher auf Ausführungsbeispiele der Erfindung eingegangen. Es zeigen:
- Fig. 1: eine Schrägansicht einer Lamelle;
- Fig. 2: schematisch das Zusammenwirken zweier aufeinander folgender Lamellen nach Fig. 1;
- Fig. 3: eine dachförmige Lamelle;
- Fig. 4: schematisch das Zusammenwirken von dachförmigen Lamellen nach Fig. 3.

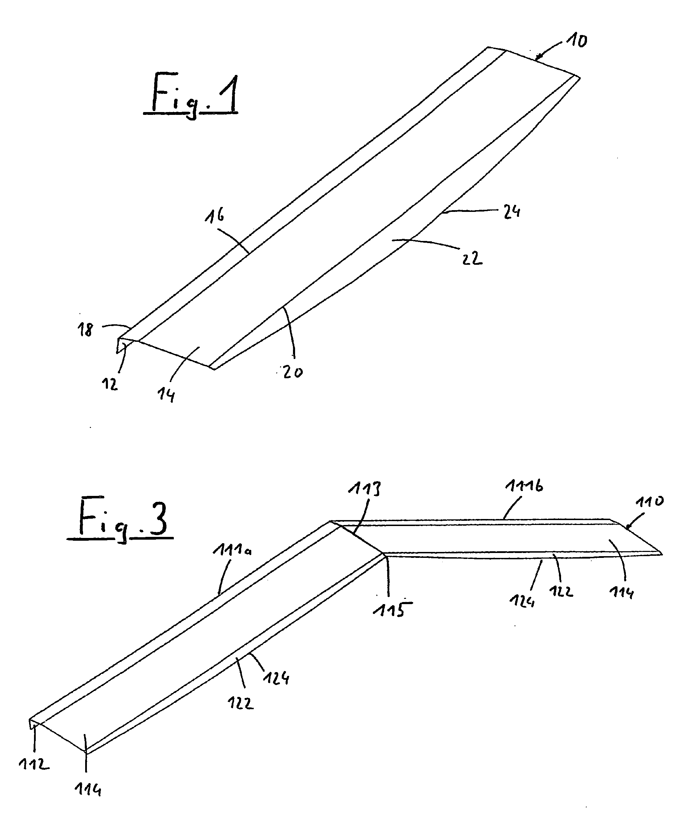

In Fig. 1 ist eine Lamelle 10 gezeigt, wie sie zum Aufbau von längenvariablen Schutzabdeckungen (nicht gezeigt) eingesetzt wird, wobei eine Vielzahl aufeinander folgender Lamellen 10 mittels einer Befestigungskante 12 an sie verbindenden Koppelelementen (nicht gezeigt) oder an einem Faltenbalg angeordnet sind. Die Befestigungskante 12 ist zu dem Lamellengrundkörper 14 bei dem gezeigten Ausführungsbeispiel um ungefähr 80° abgewinkelt, wobei der Neigungswinkel durch eine erste Biegelinie 16 mit einem sehr flachen Biegewinkel und eine zweite Biegelinie 18 mit einem stärkeren Biegewinkel erreicht wird.

Auf der der Befestigungskante 12 gegenüberliegenden Längsseite der Lamelle 10 ist über eine dritte Biegelinie 20 eine Abstreifkante 22 angeordnet, die bei dem gezeigten Ausführungsbeispiel in einem Neigungswinkel von ca. 10 bis 15° gegenüber dem Lamellengrundkörper 14 geneigt ist. Die Abstreifkante 22 besitzt eine über die Länge der Lamelle 10 variable Breite, so dass ein Rand 24 der Abstreifkante 22 insgesamt einen Radius oder mehrere ineinander übergehende Radien beschreibt. Die Differenz der maximalen Breite der Abstreifkante 22 zur kleinsten Breite ist klein im Verhältnis zur Länge der Lamelle und liegt in der Regel im einstelligen Prozentbereich der Lamellenlänge. Der Radius muss nicht konstant ausgeführt sein, es sind auch derart variable Radien über die Länge der Lamelle denkbar, dass der Rand 24 der Abstreifkante 22 beispielsweise eine Parabel, Hyperbel oder Ellipse beschreibt. Je nach Konstruktion der Schutzabdeckung kann der Rand zusätzlich auch nicht stetige Stellen, d. h. Spitzen oder Kerben, oder geradlinige Abschnitte aufweisen.

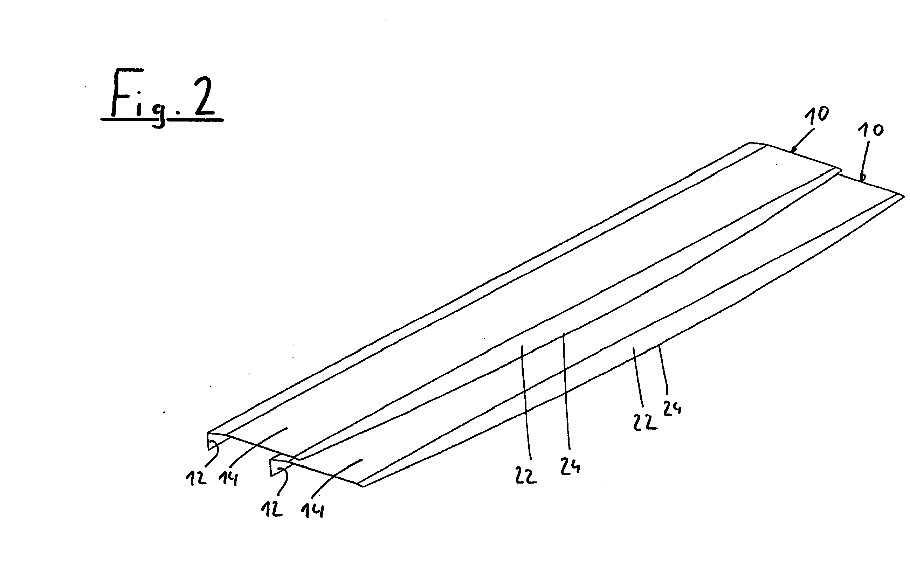

In Fig. 2 ist das Zusammenwirken der Lamellen 10 nach dem Aufbau der Schutzabdeckung dargestellt, wobei wiederum auf die Darstellung eines Faltenbalges oder von Koppelelementen verzichtet worden ist. Der Rand 24 der Lamelle 10 gleitet auf der Oberseite des Lamellengrundkörpers 14 einer nachfolgenden Lamelle, wobei durch die im gezeigten Ausführungsbeispiel konvexe Ausgestaltung des Lamellenrandes 24 selbst auf dem weitgehend ebenen Bereich des Grundkörpers der nachfolgenden Lamelle 10 eine gute Abdichtwirkung gegen das Eindringen von Fremdkörpern erreicht werden kann.

In Fig. 3 ist eine weitere Ausführungsform einer Lamelle 110 gezeigt, die sich in zwei Teilabschnitte 111a, 111b gliedert. Die einzelnen Teilabschnitte 111a, b entsprechen praktisch der zuvor beschriebenen Lamelle 10 nach Fig. 1 und verfügen entsprechend über jeweils eine Befestigungskante 112, einen Lamellengrundkörper 114 und eine Abstreifkante 122. Mittig sind die Teilabschnitte 111a, 111b über eine Knickstelle 113 verbunden, so dass sich eine dachartige Ausbildung der Gesamtlamelle 110 ergibt. Eine derartige Lamellenausbildung kann beispielsweise bei großen Lamellengesamtlängen von Vorteil sein, möglich sind aber auch Lamellen, deren aneinandergereihte Teilabschnitte L- oder U-förmige Schutzabdeckungen ergeben und die entsprechend auch noch weitere Teilabschnitte haben. Auch gewölbeartig polygonale Ausbildungen mit einer Vielzahl von Teilabschnitten sind möglich.

Bei der gezeigten Ausführungsform verfügen die beiden Teilabschnitte an ihren Abstreifkanten jeweils über konvexe Ränder 124, d. h. die Ränder 124 der Abstreifkanten 122 haben verschiedene Mittelpunkte ihrer Krümmung, wobei im Bereich der Knickstelle 113 eine Kerbe 115 zwischen den Rändern 124 der beiden Teilabschnitte 111a, b vorhanden ist.

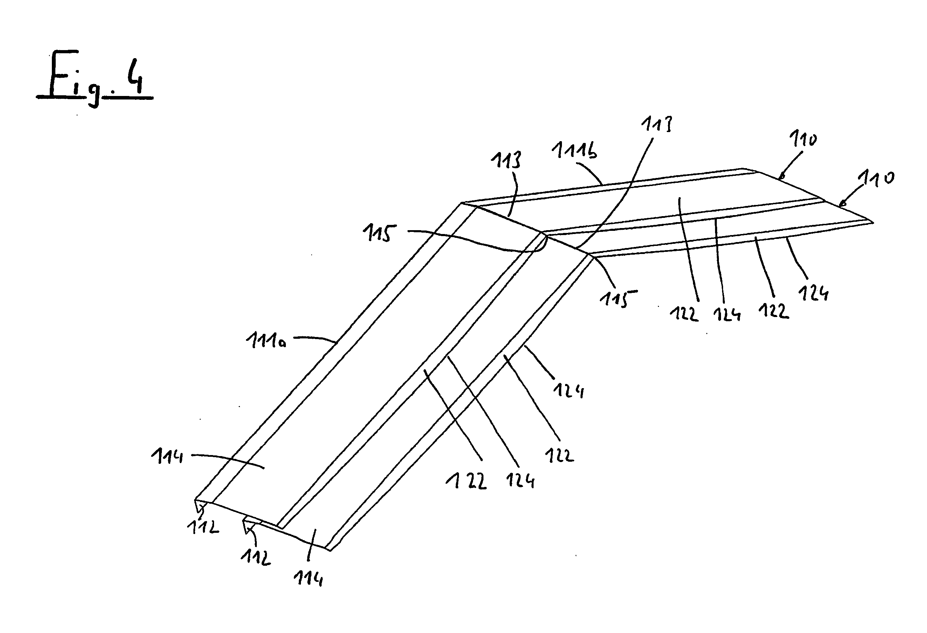

In Fig. 4 ist das Zusammenwirken aufeinander folgender Lamellen 110 mit dachförmiger Ausbildung nach Fig. 3 dargestellt. Wiederum gleiten die Ränder 124 der Abstreifkanten 122 auf den Lamellengrundkörpern 114 benachbarter Lamellen und stellen so die Dichtwirkung sicher. Die Kerbe zwischen den Teilabschnitten 111a, b im Bereich der Ränder 124 ist nicht von Nachteil, da dort auch im Bereich der Lamellengrundkörper 114 die entsprechende Knickstelle 113 zwischen den Lamellengrundkörpern 114 verläuft.

Zu erwähnen ist noch, dass die konvexe Gestaltung des Randes 124 auch den Abtransport von auftreffenden Fremdkörpern zum seitlichen Rand der Schutzabdeckung hin fördert, während bei geradlinigen Rändern von Abstreifkanten sich die Fremdkörper dauerhaft auf den Lamellengrundkörpern der benachbarten Lamellen ansammeln können.

## Patentansprüche

1. Längenvariable Schutzabdeckung, die eine Vielzahl von Lamellen (10; 110) aufweist, die an einer Längsseite jeweils eine stark abgewinkelte Befestigungskante (12; 112), mit welcher sie mit die Lamellen verbindenden Koppelelementen oder mit einem die Lamellen verbindenden Faltenbalg verbunden sind, und an ihrer gegenüberliegenden Längsseite jeweils eine flach abgewinkelte Abstreifkante (22; 122) aufweisen, deren Rand (24; 124) auf einer jeweils benachbarten Lamelle (10; 110) aufliegt, **dadurch gekennzeichnet, dass** die Breite der Abstreifkanten (22; 124) über die Länge der Lamellen (10; 110) derart variiert, dass sich jeweils ein konvexer Verlauf des Randes (24; 124) der Abstreifkanten (22; 122) über ihre gesamte Länge ergibt.

2. Längenvariable Schutzabdeckung nach Anspruch 1, **dadurch gekennzeichnet, dass** die Lamellen (110) über ihre Länge mehrere Teilabschnitte (111a, 111b) aufweisen, bei denen die Breite der Abstreifkanten (122) jeweils über die Länge der Teilabschnitte einen konvexen Verlauf besitzt.

3. Längenvariable Schutzabdeckung nach Anspruch 2, **dadurch gekennzeichnet, dass** zwischen den Teilabschnitten (111a, 111b) der Lamellen (110) eine Knickstelle (113) mit einer Biegekante oder einer Trennfuge vorgesehen ist, so dass sich eine Dachform oder polygonale Form der Lamellen (110) ergibt.

4. Längenvariable Schutzabdeckung nach einem der Ansprüche 2 bis 4, **dadurch gekennzeichnet, dass** die Ränder (24; 124) der Abstreifkanten (22; 124) über die Länge der Lamellen (110) bzw. die Längen der Teilabschnitte (111a, 111b) einen konstanten Radius aufweisen.

5. Längenvariable Schutzabdeckung nach einem der Ansprüche 2 bis 4, **dadurch gekennzeichnet, dass** die Ränder (24; 124) der Abstreifkanten (22; 122) eine Parabel, Hyperbel oder Ellipse beschreiben oder einer sonstigen Funktion folgen.

6. Längenvariable Schutzabdeckung nach einem der vorhergehenden Ansprüche, **dadurch gekennzeichnet, dass** die Lamellen (10; 110) U-förmig ausgebildet sind, wobei der Steg des U die Befestigungskante bildet und jeder der beiden Schenkel des U eine Abstreifkante aufweist.

7. Längenvariable Schutzabdeckung nach einem der vorhergehenden Ansprüche, **dadurch gekennzeichnet, dass** die Lamellen aus Metall oder Kunststoff bestehen.

## Claims

1. A longitudinally variable protective cover, which encompasses a plurality of lamellae (10; 110), which, on a longitudinal side, in each case encompass a highly-angled fastening flange (12; 112), to which they are connected by means of coupling elements, which connect the lamellae, or by means a bellows, which connects the lamellae, and, on their opposite longitudinal side, in each case encompass a flat angled wiping flange (22; 122), the edge (24; 124) of which rests on a respective adjacent lamella (10; 110), **characterized in that** the width of the wiping flanges (22; 124) varies across the length of the lamellae (10; 110) such that a convex course of the edge (24; 124) of the wiping flanges (22; 122) in each case follows across the entire length thereof.

2. The longitudinally variable protective cover according to claim 1, **characterized in that**, across their length, the lamellae (110) encompass a plurality of partial sections (111a, 111b), in the case of which the width of the wiping flanges (122) has a convex course across the length of the partial sections in each case.

3. The longitudinally variable protective cover according to claim 2, **characterized in that** provision is made between the partial sections (111a, 111b) of the lamellae (110) for a kink (113) comprising a bending flange or a slit, thus resulting in a roof shape or polygonal shape of the lamellae (110).

4. The longitudinally variable protective cover according to any one of claims 2 to 4, **characterized in that** the edges (24; 124) of the wiping flanges (22; 124) encompass a constant radius across the length of the lamellae (110) or the lengths of the partial sections (111a, 111b), respectively.

5. The longitudinally variable protective cover according to any one of claims 2 to 4, **characterized in that** the edges (24; 124) of the wiping flanges (22; 122) describe a parabola, hyperbola or ellipsis or follow another function.

6. The longitudinally variable protective cover according to any one of the preceding claims, **characterized in that** the lamellae (10; 110) are embodied in a U-shaped manner, wherein the bar of the U forms the fastening flange and each of the two legs of the U encompasses a wiping flange.

7. The longitudinally variable protective cover according to any one of the preceding claims, **characterized in that** the lamellae consist of metal or plastic.

## Revendications

1. Recouvrement protecteur variable en longueur qui présente une pluralité de lamelles (10 ; 110) qui présentent sur un côté longitudinal à chaque fois une arête de fixation fortement pliée (12 ; 112) à laquelle elles sont reliées avec des éléments de raccordement reliant les lamelles ou avec un soufflet reliant les lamelles, et sur leur côté longitudinal opposé à chaque fois une arête racleuse pliée à plat (22 ; 122) dont le bord (24 ; 124) repose sur une lamelle respectivement voisine (10 ; 110), **caractérisé en ce que** la largeur des arêtes racleuses (22 ; 124) varie sur la longueur des lamelles (10 ; 110) de telle sorte qu'une allure convexe du bord (24 ; 124) des arêtes racleuses (22 ; 122) en résulte à chaque fois sur leur longueur entière.

2. Recouvrement protecteur variable en longueur selon la revendication 1, **caractérisé en ce que** les lamelles (110) présentent plusieurs sections partielles (111a, 111b) sur leur longueur pour lesquelles la largeur des arêtes racleuses (122) possède à chaque fois une allure convexe sur la longueur des sections partielles.

3. Recouvrement protecteur variable en longueur selon la revendication 2, **caractérisé en ce qu'**un point d'inflexion (113) avec une arête de pliage ou une fente de séparation est prévu entre les sections partielles (111a, 111b) des lamelles (110) de sorte qu'une forme de toit ou une forme polygonale des lamelles (110) en résulte.

4. Recouvrement protecteur variable en longueur selon l'une quelconque des revendications 2 à 4, **caractérisé en ce que** les bords (24 ; 124) des arêtes racleuses (22 ; 124) présentent un rayon constant sur la longueur des lamelles (110) ou les longueurs des sections partielles (111a, 111b) .

5. Recouvrement protecteur variable en longueur selon l'une quelconque des revendications 2 à 4, **caractérisé en ce que** les bords (24 ; 124) des arêtes racleuses (22 ; 122) décrivent une parabole, hyperbole ou ellipse ou suivent une autre fonction.

6. Recouvrement protecteur variable en longueur selon l'une quelconque des revendications précédentes, **caractérisé en ce que** les lamelles (10 ; 110) sont réalisées en forme de U, dans lequel la barrette du U forme l'arête de fixation et chacune des deux branches du U présente une arête racleuse.

7. Recouvrement protecteur variable en longueur selon l'une quelconque des revendications précédentes, **caractérisé en ce que** les lamelles se composent de métal ou plastique.
